# EUROPEAN PATENT SPECIFICATION

(11) **EP 3 250 377 B1**
(45) Date of publication and mention of the grant of the patent: **05.01.2022**
(21) Application number: 16705369.3
(22) Date of filing: 27.01.2016
(51) Int. Cl.: B32B 7/00, B32B 7/12, B32B 27/06, B32B 27/08, B32B 27/16, B32B 27/18, B32B 27/28, B32B 27/30, B32B 27/32, B32B 27/34, B32B 27/36, B32B 29/00

(54) **MULTILAYER FILM STRUCTURES COMPRISING RENEWABLE POLYESTER COMPOSITIONS**
MEHRLAGIGE FOLIENSTRUKTUREN MIT ERNEUERBAREN POLYESTERMATERIALIEN
STRUCTURES DE FILM MULTICOUCHES COMPORTANT DES COMPOSITIONS POLYESTER RENOUVELABLES

(30) Priority: 28.01.2015 US 201562108636 P
(43) Date of publication of application: 06.12.2017
(73) Proprietor: Dow Global Technologies LLC, Midland, MI 48674 (US)
(72) Inventor: HAUSMANN, Karlheinz, 2012 Auvernier (CH); TROUILHET, Yves M., CH-1222 Vesenaz (CH)
(74) Representative: Boult Wade Tennant LLP
(86) International application number: PCT/US2016/015106
(87) International publication number: WO 2016/123209

(56) References cited:
- US-A1- 2009 029 080
- US-A1- 2013 029 553
- US-A1- 2013 164 516
- US-A1- 2014 113 142
- US-A1- 2014 370 278

## Description

### CROSS-REFERENCE TO RELATED APPLICATION

This application claims priority under 35 U.S.C. § 119 to U.S. Provisional Appln. No. 62/108,636, filed on January 28, 2015.

### FIELD OF THE INVENTION

The invention relates to a co-extruded multilayer structure comprising a renewable polyester composition in which the polyester is monoaxially or biaxially oriented. The co-extruded multilayer structure is useful in packaging applications, in particular in food packaging applications.

### BACKGROUND OF THE INVENTION

Several patents, patent applications and publications are cited in this description in order to more fully describe the state of the art to which this invention pertains.

Multilayer film or sheet structures are complex assemblies with careful combination of multiple functional layers in order to achieve a desired end-product. US2013/029553 relates to multilayer films comprising hot-coextrudable pressure-sensitive adhesives, which are suitable for use in packages that may be opened and reclosed easily and to methods of coextruding a thermoplastic composition with a low melt processing temperature with a different thermoplastic composition having a significantly higher melt processing temperature.

US2014/370278 relates to shrinkable and non-shrinkable coextruded multilayer film structures that can be used in packaging such as in food packaging applications.

In the past, processes such as calendering, extrusion coating, film blowing and (extrusion) lamination have been developed to manufacture multilayered film structures. These processes remain commercially relevant.

In calendering and lamination processes, the individual layers that make up the final structure are stacked on top of each other, in the desired sequence, and are then subjected to heat and pressure. The applied heat melts, or at least sufficiently softens, the individual layers, whereas the applied pressure pushes the molten or softened layers together. When the pressure and heat are released, the individual layers are ideally consolidated into one continuous multilayer film structure that can be used in a variety of applications.

In extrusion coating or extrusion lamination, the combination of various layers is achieved by passing a single or multilayered film under a slit die extruder at a preset speed. The veil of molten polymer exits the slit die and is deposited onto the passing film. The extrusion-coated film may be passed through a nip that is optionally cooled, to promote the solidification of the molten polymer.

The methods described above can be successfully used in the manufacture of multilayer films in which the properties of the individual layers are to be unified and combined in one structure. Examples of such properties include, for example, oxygen barrier capability, a favorable water vapor transmission rate, and mechanical stability.

For instance, a laminate combination of bi-axially oriented polyethylene terephthalate (PET), which is known for its excellent barrier properties and mechanical resistance, and of polyolefinic sealant layer can be achieved by calendering or laminating a sheet of bi-axially oriented polyethylene terephthalate with a sheet of a polyolefinic sealant at temperatures of about 160°C.

Alternatively, a layer of polyolefinic sealant can be extrusion-coated onto a bi-axially oriented polyethylene terephthalate film at temperatures above 160°C to produce the same structure as the lamination.

PET is mostly derived from petrochemical ingredients, however, and is therefore less desirable compared to alternative polymers that can be derived from renewable sources or that are biodegradable.

Polytrimethylene terephthalate (PTT) and polytrimethylene furanoate (PTF) are polyesters that may be renewably sourced, biodegradable, or both renewably sourced and biodegradable. Both PTT and PTF comprise the renewable monomer 1,3-propanediol, which may be sourced from biomaterials such as corn, wheat and other plants.

When polytrimethylene terephthalate and polytrimethylene furanoate are bi-axially oriented, they provide for barrier functions matching or exceeding those of polyethylene terephthalate, as well as excellent mechanical stability.

When compared to polyethylene terephthalate, however, polytrimethylene terephthalate and polytrimethylene furanoate have a common drawback that makes the manufacture of multilayer films comprising either of them significantly more difficult.

Mono- or bi-axially oriented polytrimethylene terephthalate and polytrimethylene furanoate shrink by at least 10%, and up to 20% in at least one direction, when heated to temperatures that are typical and necessary to laminate, extrusion laminate or extrusion coat for example a polyolefinic sealant layer onto a film. This shrinkage may occur at temperatures of about 160°C or somewhat lower, depending on the polymer.

This thermal shrinkage behavior is due to the low glass transition temperatures (T_{g}) of polytrimethylene terephthalate and polytrimethylene furanoate.

Because of the aforementioned thermal shrinkage behavior, it may be cumbersome to laminate oriented polytrimethylene terephthalate or polytrimethylene furanoate film to other layers, such as for example a polyolefinic sealant layer, or to extrude a layer of polyolefinic sealant onto an oriented sheet of polytrimethylene terephthalate or polytrimethylene furanoate, when the processing temperature of the polyolefinic sealant approaches the melting temperature of the polyester, its glass transition temperature, or a temperature at which the oriented polyester begins to deform.

For example, as the sheet of oriented polytrimethylene terephthalate or polytrimethylene furanoate is laminated, it may shrink during the heating step, thus inducing creases, folds or bulges in the laminate.

Furthermore, since the extent of thermal shrinkage may not be fully uniform over the entire sheet of polytrimethylene terephthalate or polytrimethylene furanoate, the sheet may have an inhomogeneous thickness distribution after lamination.

The thermal shrinkage induced by the lamination leads to a loss of crystallinity which inevitably results in a significant reduction of mechanical and barrier properties.

In an effort to manufacture laminates comprising an oriented polytrimethylene terephthalate or polytrimethylene furanoate layer despite the above difficulties, it has been proposed to circumvent these problems by adhesive lamination, i.e., by gluing the different layers together with solvent-based adhesives. Such a manufacturing process includes the additional steps of applying the adhesives, however, and furthermore raises concerns about the solvents used in such adhesives, as well as the migration thereof into the packaged goods. Also, such complicated manufacturing methods result in added economic burden.

In summary, the majority of polyolefinic sealants used in combination with polyethylene terephthalate films are polyolefinic sealants requiring lamination or calendering temperatures well above 100°C, depending on their melting temperature (T_{M}). It is therefore apparent that such sealants are not easily used in the manufacture of multilayer films comprising a layer of oriented polytrimethylene terephthalate or polytrimethylene furanoate.

Thus, there is a strong desire to develop a process that can effectively provide for high-quality multilayer films comprising a layer of oriented polytrimethylene terephthalate or polytrimethylene furanoate in combination with other functional layers, such as sealant layers. It is further desirable for such films to be manufactured easily in an industrial process.

### SUMMARY OF THE INVENTION

The invention provides for a multilayer structure, such as coextruded multilayer structure, comprising at least one layer of mono- or bi-axially oriented, polytrimethylene terephthalate and/or polytrimethylene furanoate polymer composition, at least one tie layer, and at least one sealant layer.

The invention also provides for a coextruded multilayer film structure obtainable in a triple bubble (3B) process, comprising at least one layer of mono- or bi-axially oriented polytrimethylene terephthalate and/or polytrimethylene furanoate polymer composition, at least one tie layer, and at least one sealant layer.

The invention also provides for a triple bubble (3B) process for manufacturing a coextruded multilayer film structure, which process comprises the steps of coextruding a tubular multilayer film structure comprising at least one layer of polytrimethylene terephthalate and/or polytrimethylene furanoate polymer composition, at least one tie layer, and at least one sealant layer; cooling the coextruded tubular multilayer film structure in a first bubble; mono- or bi-axially orienting at least one layer of the coextruded tubular multilayer film structure under heating in a second bubble; and relaxing the mono- or bi-axially oriented coextruded tubular multilayer film structure under heating in a third bubble; wherein the heating in the second bubble is applied to the upstream end of the second bubble.

It has now surprisingly been found that coextruded multilayer film structures comprising at least one layer of mono- or bi-axially oriented polytrimethylene terephthalate and/or polytrimethylene furanoate polymer composition, at least one tie layer and at least one sealant layer can be obtained by a triple bubble (3B) process as described above, and that the thickness of the at least one layer of mono- or bi-axially oriented polytrimethylene terephthalate and/or polytrimethylene furanoate polymer composition in the coextruded multilayer film structures can be in the range of from 2 to 5 µm while at the same time obtaining a stable, self-sustaining bubble comparable to bubbles in which the polyester layer is a conventional polyethylene terephthalate. Stated alternatively, coextruded multilayer film structures of the present invention are more stretchable than structures based solely on polyethylene terephthalate. Furthermore, the resulting multilayer film structures are softer or less rigid, compared to polyethylene terephthalate based solutions.

The advantages and features of novelty that characterize the invention are pointed out with particularity in the claims annexed hereto and forming a part hereof. For a better understanding of the invention, its advantages, and the objects obtained by its use, however, reference should be made to the drawings which form a further part hereof, and to the accompanying descriptive matter, in which there is illustrated and described one or more preferred embodiments of the invention.

### BRIEF DESCRIPTION OF THE DRAWING

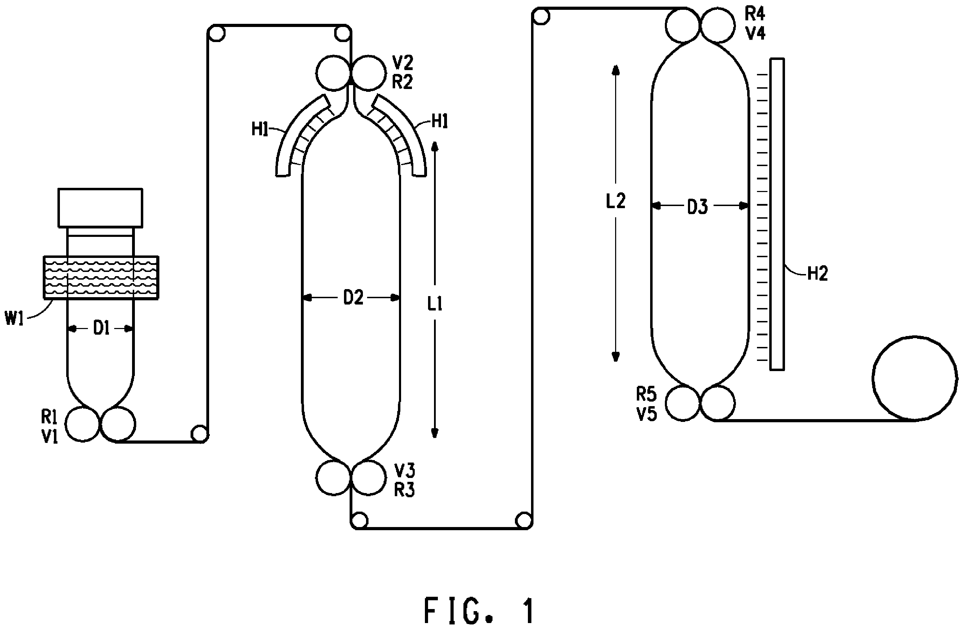

**FIG. 1** shows a schematic view of a triple bubble (3B) process.

### DETAILED DESCRIPTION OF THE INVENTION

As used herein, the term "copolymer" refers to polymers comprising copolymerized units resulting from copolymerization of two or more comonomers. In this connection, a copolymer may be described herein with reference to its constituent comonomers or to the amounts of its constituent comonomers, for example "a copolymer comprising ethylene and 15 weight % of acrylic acid", or a similar description. Such a description may be considered informal in that it does not refer to the comonomers as copolymerized units; in that it does not include a conventional nomenclature for the copolymer, for example International Union of Pure and Applied Chemistry (IUPAC) nomenclature; in that it does not use product-by-process terminology; or for another reason. As used herein, however, a description of a copolymer with reference to its constituent comonomers or to the amounts of its constituent comonomers means that the copolymer contains copolymerized units (in the specified amounts when specified) of the specified comonomers. It follows as a corollary that a copolymer is not the product of a reaction mixture containing given comonomers in given amounts, unless expressly stated in limited circumstances to be such.

The term "renewable polymers", as used herein, refers to polymers that are entirely or partially prepared from renewably sourced starting materials that can be replenished within a few years, such as for example vegetal starting materials, in a preferably sustainable fashion. The content of renewably sourced starting material in a polymer can be determined by the C14 method described in ASTM 6686-08.

The present invention provides a coextruded multilayer film structure comprising at least one mono- or bi-axially oriented layer that comprises a polymer composition, said polymer composition comprising polytrimethylene terephthalate and/or polytrimethylene furanoate; at least one tie layer; and at least one sealant layer.

The coextruded multilayer film structures of the present invention may be partially or entirely manufactured from renewable polymers.

In particular, when the polymer composition comprises the polytrimethylene terephthalate, it may comprise from 1 to 100 weight percent or from 1 to 50 weight percent of polytrimethylene terephthalate polymer, based on the total weight of the polymer composition. In addition, the polytrimethylene terephthalate polymer may be derived at least partially from renewably sourced starting materials. When the polymer composition comprises less than 100 weight percent of polytrimethylene terephthalate polymer, the polymer composition may comprise from 1 to 99 weight percent or from 50 to 99 weight percent of polyethylene terephthalate.

Polytrimethylene terephthalate may be obtained, for example, by a condensation polymerization reaction of 1,3-propanediol with terephthalic acid or dimethyl terephthalate, in preferably equimolar amounts.

The 1,3-propanediol may be obtained by fermentation, for example bacterial fermentation, of a renewable feedstock such as for example corn syrup.

Furthermore, when the polymer composition comprises the polytrimethylene furanoate, it may comprise from 1 to 100 weight percent of polytrimethylene furanoate polymer, based on the total weight of the polymer composition. The polytrimethylene furanoate polymer may be derived at least partially from renewably sourced starting material. When the polymer composition comprises less than 100 weight percent of polytrimethylene furanoate polymer, the polymer composition may comprise from 1 to 99 weight % or from 50 to 99 weight % of polyethylene terephthalate.

Polytrimethylene furanoate may be obtained by a condensation polymerization reaction of 1,3-propanediol with 2,5-furandicarboxylic acid (FDCA) or its esters, such as dimethyl-2,5-furanoate, in preferably equimolar amounts.

In addition to the aforementioned 1,3-propanediol, other copolymerized C2 to C12 diols may optionally be comprised in the polytrimethylene furanoate or in the polytrimethylene terephthalate, such as for example ethylene glycol, 1,2-propanediol, 1,4-butanediol, 1,5-pentanediol, 1,6-hexanediol, 1,4-cyclohexanedimethanol (CHDM), 2,2-dimethyl-1,3-propanediol. Likewise, the polytrimethylene furanoate and the polytrimethylene terephthalate may further include copolymerized residues of other optional polyfunctional aromatic acids other than 2,5-furandicarboxylic acid, such as for example terephthalic acid (for PTF), isophthalic acid, adipic acid, azelic acid, sebacic acid, dodecanoic acid, 1,4-cyclohexane dicarboxylic acid, maleic acid, succinic acid, 1,3,5-benzenetricarboxylic acid, glycolic acid, hydroxybutyric acid, hydroxycaproic acid, hydroxyvaleric acid, 7-hydroxyheptanoic acid, 8-hydroxycaproic acid, 9-hydroxynonanoic acid or lactic acid. When present, the amount of copolymerized residues of the optional comonomer(s) may be up to 25 wt%, or up to 20 wt%, based on the total weight of the polytrimethylene furanoate or of the polytrimethylene terephthalate.

The 2,5-furandicarboxylic acid may also be obtained by fermentation, for example bacterial fermentation, of a renewable feedstock such as for example corn syrup.

The polymer composition may further comprise modifiers and other additives, including without limitation, plasticizers, impact modifiers, stabilizers including viscosity stabilizers and hydrolytic stabilizers, lubricants, antioxidants, UV light stabilizers, antifog agents, antistatic agents, dyes, pigments or other coloring agents, fillers, flame retardant agents, reinforcing agents, foaming and blowing agents and processing aids known in the polymer compounding art, for example antiblock agents and release agents.

The above modifiers and other additives may be present in the polymer composition in amounts of up to 20 weight percent, from 0.01 to 7 weight percent, or from 0.01 to 5 weight percent, the weight percentage being based on the total weight of the polymer composition.

The thickness of the at least one mono- or bi-axially oriented layer in the coextruded multilayer film structure depends on the end use of the coextruded multilayer film structure and can range from 1 to 200 µm or from 1 to 50 µm, the range of 1 to 50 µm being the commercially most relevant because of weight reduction obtained by downgauging.

When used in a flexible multilayer packaging structure, the at least one mono- or bi-axially oriented layer may have a thickness of from 1 to 50 µm, from 1 to 10 µm or from 2 to 5 µm.

When used in a rigid multilayer structure, the at least one mono- or bi-axially oriented layer may have a thickness of from 10 to 1000 µm.

The thickness of the layers is calculated by measuring the overall thickness of the coextruded multilayer film structure with a High-Accuracy Digimatic Micrometer caliper (Mitsutoyo, JP) and by subdividing the overall thickness relative to the throughputs of the corresponding extruders.

The coextruded multilayer film structure according to the invention comprises at least one tie layer.

The at least one tie layer serves to adhere the at least one mono- or bi-axially oriented layer to the at least one sealant layer, and/or any other adjacent layers comprised in the coextruded multilayer film structure. In the case where the at least one tie layer serves to adhere the at least one mono- or bi-axially oriented layer to the at least one sealant layer, the at least one tie layer is adjacent to the at least one sealant layer and the at least one mono- or bi-axially oriented layer. Stated alternatively, the at least one tie layer is sandwiched between the at least one mono- or bi-axially oriented layer and the at least one sealant layer.

The at least one tie layer may comprise one or more olefin homopolymers and/or copolymers. Preferably, the one or more olefin homopolymers and/or copolymers are chosen from among polyethylene homopolymers and/or copolymers, propylene homopolymers and/or copolymers, and/or mixtures thereof.

Non-limiting examples of polyethylene homopolymers and/or copolymers suitable as tie layers in the coextruded multilayer film structure according to the invention are, for example, ultra-low density polyethylene (ULDPE); very low density polyethylene (VLDPE); low density polyethylene (LDPE); linear low density polyethylene (LLDPE); high density polyethylene (HDPE); or metallocene polyethylene (mPE) and other single-site catalyzed polyethylenes.

Polyethylene homopolymers and/or copolymers may be made by any available process known in the art including high pressure gas, low pressure gas, solution and slurry processes employing conventional Ziegler-Natta, metallocene or other single-site catalyst systems, and late transition metal complex catalyst systems.

Polypropylene homopolymers and/or copolymers such as random copolymers, block copolymers and terpolymers of propylene include copolymers of propylene with other olefins such as ethylene, 1-butene, 2-butene and the various pentene isomers. Also included are terpolymers of propylene such as copolymers of propylene with ethylene and one other olefin. The propylene copolymers may be random copolymers (statistical copolymers) that have propylene and the comonomer(s) randomly distributed throughout the polymeric chain in ratios corresponding to the feed ratio of the propylene to the comonomer(s). Alternatively, the propylene copolymers may be block copolymers. Suitable block copolymers are made up of chain segments consisting of propylene homopolymer and of chain segments consisting of, for example, random copolymers of propylene and ethylene.

Polypropylene homopolymers and/or copolymers may be manufactured by any known process (e.g., using a Ziegler-Natta catalyst, which may be based on organometallic compounds or on solids containing titanium trichloride). Block copolymers can be manufactured similarly, except that propylene is generally first polymerized by itself in a first stage and propylene and additional comonomers such as ethylene are then polymerized, in a second stage, in the presence of the polymer obtained during the first. Processes for producing polypropylenes are well known to those of skill in the art.

More preferably, the at least one tie layer of the coextruded multilayer film structure comprises one or more ethylene copolymers, having a melting temperature (T_{M}) of from 80°C to130°C or from 80°C to 100°C.

"Ethylene copolymer" refers to a polymer comprising repeat units derived from ethylene and at least one additional monomer.

The one or more ethylene copolymers comprised in the tie layer of the multilayer structure may be chosen from among ethylene α-olefin copolymers, ethylene vinyl acetate copolymers, ethylene alkyl (meth)acrylate copolymers, or combinations of two or more thereof.

"Alkyl (meth)acrylate" refers to alkyl acrylate and/or alkyl methacrylate.

Ethylene alkyl (meth)acrylate copolymers are thermoplastic ethylene copolymers derived from the copolymerization of ethylene comonomer and at least one alkyl (meth)acrylate comonomer, wherein the alkyl group contains from one to ten carbon atoms or from one to four carbon atoms.

Preferably, the one or more ethylene copolymers comprised in the tie layer are chosen among ethylene α-olefin, ethylene vinyl acetate copolymers, ethylene methyl (meth)acrylate copolymers, ethylene ethyl (meth)acrylate copolymers, ethylene butyl (meth)acrylate copolymers, or combinations of two or more thereof.

More preferably, the ethylene copolymer is an ethylene α-olefin copolymer which comprises ethylene and an α-olefin of three to twenty carbon atoms, or four to eight carbon atoms.

Typically, the density of the ethylene α-olefin copolymers ranges from 0.860 g/cm³ to 0.925 g/cm³, from 0.860 g/cm³ to 0.910 g/cm³, or between 0.880 g/cm³ to 0.905 g/cm³. Resins made by Ziegler-Natta type catalysis and by metallocene or single-site catalysis are included provided they fall within the described density ranges. The metallocene or single-site resins useful herein are (i) those which have an I-10/I-2 ratio of less than 5.63 and an Mw/Mn (polydispersivity) of greater than (I-10/I-2)-4.63, and (ii) those based which have an I-10/I-2 ratio of equal to or greater than 5.63 and a polydispersivity equal to or less than (I-10/I-2) - 4.63. Preferably, the metallocene resins of group (ii) have a polydispersivity of greater than 1.5 but less than or equal to (I-10/I-2)-4.63. Suitable conditions and catalysts which can produce substantially linear metallocene resins are described in U.S. Pat. No. 5,278,272, including detailed descriptions of the measurement of the well-known rheological parameters 1-10 and I-2, which are flow values under different load and hence shear conditions. Also provided are details of the measurement of the well-known Mw/Mn ratio, as determined by gel-permeation chromatography (GPC).

In the case where the at least one tie layer comprises an ethylene vinyl acetate copolymer, the relative amount of copolymerized vinyl acetate units may be of from 2 to 40 weight percent, preferably from 10 to 40 weight percent, the weight percentage being based on the total weight of the ethylene vinyl acetate copolymer. A mixture of two or more different ethylene vinyl acetate copolymers may be used as components of the tie layer in place of a single copolymer.

In the case where the at least one tie layer comprises an ethylene alkyl (meth)acrylate copolymer, the relative amount of copolymerized alkyl (meth)acrylate units may be of from 0.1 to 45 weight percent, preferably from 5 to 35 weight percent and still more preferably from 8 to 28 weight percent, the weight percentage being based on the total weight of the ethylene alkyl (meth)acrylate copolymer. Preferably, the ethylene alkyl (meth)acrylate copolymer of the at least one tie layer has a melting temperature (T_{M}) of from 85°C to 100°C and is obtained in a tubular-type polymerization process instead of an autoclave-type polymerization.

The one or more olefin homopolymers and/or copolymers may be modified copolymers, meaning that the copolymers are grafted and/or directly copolymerized with comonomers comprising organic functionalities. Modified polymers for use in the tie layer may be modified with acid, anhydride and/or epoxide functionalities. Examples of the acids and anhydrides used to modify polymers, which may be mono-, di- or polycarboxylic acids are acrylic acid, methacrylic acid, maleic acid, maleic acid monoethylester, fumaric acid, furnaric acid, itaconic acid, crotonic acid, itaconic anhydride, maleic anhydride and substituted maleic anhydride, e.g. dimethyl maleic anhydride or crotonic anhydride, nadic anhydride, nadic methyl anhydride, and tetrahydrophthalic anhydride, or combinations of two or more thereof, maleic anhydride being preferred.

In the case where the one or more olefin homopolymers and/or copolymers are acid-modified, they may contain from 0.05 to 25 weight percent of an acid comonomer, the weight percentage being based on the total weight of the modified polymer.

When anhydride-modified polymer is used, it may contain from 0.03 to 10 weight percent, preferably from 0.05 to 5 weight percent of an anhydride, the weight percentage being based on the total weight of the modified polymer.

Examples of epoxides used to modify polymers are unsaturated epoxides comprising from four to eleven carbon atoms, such as glycidyl (meth)acrylate, allyl glycidyl ether, vinyl glycidyl ether and glycidyl itaconate, glycidyl (meth)acrylates being particularly preferred.

Epoxide-modified ethylene copolymers preferably contain from 0.05 to 15 weight percent of an epoxide comonomer, the weight percentage being based on the total weight of the modified ethylene copolymer. Preferably, epoxide comonomers used to modify ethylene copolymers are glycidyl (meth)acrylates. The ethylene/glycidyl (meth)acrylate copolymer may further contain copolymerized units of an alkyl (meth)acrylate having from one to six carbon atoms and an α-olefin having 1 - 8 carbon atoms. Representative alkyl (meth)acrylates include methyl (meth)acrylate, ethyl (meth)acrylate, propyl (meth)acrylate, butyl (meth)acrylate, isobutyl (meth)acrylate, hexyl (meth)acrylate, or combinations of two or more thereof. Of note are ethyl acrylate and butyl acrylate. The α-olefin may be selected from the group of propylene, octene, butene and hexane, especially propylene. When present, the amount of copolymerized residues of the alkyl (meth)acrylate(s) may be 5 to 30 wt%, based on the total weight of the epoxide-modified ethylene copolymer.

The modified ethylene copolymers comprised in the tie layer may be modified with acid, anhydride and/or glycidyl (meth)acrylate functionalities.

In some preferred embodiments, the tie layer comprises or consists of a pressure sensitive adhesive.

Olefins homopolymers and/or copolymers and modified polymers useful for the present invention are commercially available under the trademarks APPEEL^{®}, BYNEL^{®}, ELVALOY^{®} AC and ELVAX^{®} from E. I. du Pont de Nemours and Company, Wilmington, Delaware (DuPont).

The ethylene copolymers suitable for use in the tie layer of the coextruded multilayer film structure of the present invention can be produced by any means known to one skilled in the art using either autoclave or tubular reactors. Examples of suitable methods are described in U.S. Pat. Nos. 3,404,134; 5,028,674; 6,500,888; 3,350,372 and 3,756,996, for example.

The tie layer may further comprise various commonly used additives and modifiers, of the types and in the amounts described above with respect to the oriented polymer layer.

The thickness of the tie layer of the multilayer structure may be of from 1 to 100 µm, 5 to 50 µm, or 5 to 30 µm.

The coextruded multilayer film structure according to the invention further comprises at least one sealant layer, which sealant layer may have a melting temperature (T_{M}) of from 80°C to130°C or from 80°C to 100°C.

The at least one sealant layer of the coextruded multilayer film structure according to the invention serves to adhere the said film structure to any suitable substrate or to itself, and comprises one or more olefin homopolymers and/or copolymers capable of fusion bonding on and to any suitable substrate or to themselves by conventional means of heat sealing.

A suitable substrate can include foil, paper, paperboard, polyester, polyamide, polyolefin, polyethylene vinyl alcohol, polyethylene vinyl acetate, ethylene acid copolymer, ionomer of the ethylene acid copolymer, polyvinyl chloride, polyvinylidene chloride, and anhydride-modified polyolefin, polyacetal, polyacetal copolymer, or combinations of two or more thereof

The one or more olefin homopolymers and/or copolymers in the sealant layer may be chosen from among polyethylene; propylene homopolymers and/or copolymers; ethylene copolymers, such as for example ethylene (meth)acrylic acid copolymers and their corresponding ionomers; and/or mixtures thereof.

The one or more olefin homopolymers and/or copolymers in the sealant layer may be chosen among polyethylene and ethylene (meth)acrylic acid copolymers and their corresponding ionomers.

The at least one sealant layer may comprise at least one ionomer.

The at least one ionomer comprised in the at least one sealant layer of the coextruded multilayer film structure according to the present invention may be chosen among ionomers of E/X/Y copolymers where E is ethylene, X is a C3 to C8 α,β-ethylenically unsaturated carboxylic acid, and Y is an optional comonomer selected from alkyl acrylate and alkyl methacrylate.

Suitable C3 to C8 α,β-ethylenically unsaturated carboxylic acids may be chosen, for example, among methacrylic acid and acrylic acid, with methacrylic acid being preferred.

The copolymerized C3 to C8 α,β-ethylenically unsaturated carboxylic acid may be present in an amount of from 2 weight percent to 30 weight percent, from 5 weight percent to 20 weight percent, or from 12 weight percent to 19 weight percent, based on the total weight of the ionomer.

The optionally copolymerized alkyl acrylate or alkyl methacrylate may be present in an amount of from 0.1 weight % to 40 weight %, from 0.1 weight % to 10 weight %, or not present (0%) at all, again based on the total weight of the ionomer.

The carboxylic acid functionalities present in the at least one ionomer of the sealant layer are at least partially neutralized and comprise, as counterions to the carboxylate groups produced by neutralizing the copolymerized acid, one or more alkali metal, transition metal, or alkaline earth metal cations such as for example sodium, zinc, lithium, magnesium, and calcium cations; and more preferably zinc or sodium cations.

Thus, a preferred ionomer of the sealant layer may be chosen among E/X copolymers where E is copolymerized ethylene and X is copolymerized methacrylic acid, the copolymer is at least partially neutralized, and the E/X copolymer comprises zinc or sodium cations, or has a melting temperature (T_{M}) of from 80°C to130°C or from 80°C to 100°C.

The sealant layer may further comprise various commonly used additives and modifiers, of the types and in the amounts described above with respect to the oriented polymer layer.

The coextruded multilayer film structure may include additional layers, for example barrier layers or structural layers. These layers may comprise any polymer that is capable of being processed in the triple bubble (3B) process described below. Preferred polymers include, without limitation, polyethylenes, polyamides, other polyesters, other ethylene acid copolymers, other ionomers, copolymers of ethylene and vinyl alcohol (EVOH), styrene homopolymers and copolymers.

The coextruded multilayer film structure according to the present invention may be manufactured by a triple bubble (3B) process, comprising the steps of coextruding a tubular multilayer film structure comprising at least one layer of polytrimethylene terephthalate and/or polytrimethylene furanoate polymer composition, at least one tie layer, and at least one sealant layer, cooling the coextruded tubular multilayer film structure in a first bubble, mono- or bi-axially orienting at least one layer of the coextruded tubular multilayer film structure under heating in a second bubble, and relaxing the mono- or bi-axially oriented coextruded tubular multilayer film structure under heating in a third bubble, wherein the heating in the second bubble is applied to the upstream end of the second bubble.

A description of a suitable prior art triple bubble (3B) process is provided for example in WO2007099214.

The step of coextruding a tubular multilayer film structure comprising at least one layer of polytrimethylene terephthalate and/or polytrimethylene furanoate polymer composition, at least one tie layer, and at least one sealant layer may be carried out by connecting multiple extruders and separately processing the corresponding layer materials, generally in the form of granulates, to a circular or annular die to form a tubular multilayer film structure.

Referring now to FIG. 1, the polymer compositions making up the different layers in the tubular multilayer film structure of the present invention can be fed into an extruder E by methods known in the art such as to form the corresponding layers in the tubular multilayer film structure upon passing through the circular die.

The first bubble B1 of the triple bubble process is formed on one end by the tubular multilayer film having a diameter of D1 exiting the die, and on the other end by the set of rolls R1 that form the hermetically closed end of the first bubble B1.

In the first bubble B1, the tubular multilayer film structure exiting the die and having an initial diameter D1 is quickly cooled (quenched) in a way such as to obtain a minimum amount of crystallization in the structure.

The quick cooling may be obtained by quenching the exiting coextruded tubular multilayer film structure in a first water bath W1 having a temperature of from 0.1°C to 50°C, or from 0.1°C to 25°C and a length of from 0.4 to 5 m, or from 1 to 3m. The residence time in the water bath W1 may be adjusted to range of from 1 to 20 seconds.

After passing through the set of rolls R1, the coextruded tubular multilayer structure is subsequently passed through a set of nip rolls R2 that form the upstream (towards the extruder) end of a second bubble B2. At the upstream end of the second bubble B2 heating is applied, and the bubble is inflated, or opened, to form the second bubble B2 in which at least one layer of the coextruded tubular multilayer film structure is mono- or bi-axially oriented.

The heating is applied by a heat source H1, positioned at the upstream end of the second bubble B2 where the previously flattened coextruded tubular multilayer exits a set of nip rolls R2 and where the coextruded tubular multilayer structure is inflated to form the second bubble B2 using pressure P1.

The heat source H1 may be any kind of suitable heat source and may be chosen from among infrared heat sources, steam, hot air heat sources or any combination thereof. Because steam may leave residual humidity on the second bubble surface and the air heat source might disturb the bubble by their airflow, the heat source is preferably an infrared heat source.

The heats source H1 is adjusted to heat the tubular coextruded multilayer film structure to a temperature above the glass transition temperature of the polytrimethylene terephthalate and/or polytrimethylene furanoate, preferably to a temperature between 60°C and 95°C or between 60°C and 90°C, or to a temperature between 70°C to 90°C.

It is desirable that the heat source be positioned at the upstream end of the second bubble B2, because of the tendency of polytrimethylene terephthalate and/or polytrimethylene furanoate to quickly crystallize after leaving the heat source. Crystallization of the polytrimethylene terephthalate and/or polytrimethylene furanoate polymer composition in the tubular coextruded multilayer film structure leads to a structure that cannot be oriented without bursting. Therefore, positioning the heat source H1 for example upstream of the set of nip rolls R2 may yield an unstable, and eventually bursting, second bubble B2.

Thus, the present invention not only relates to the specific coextruded multilayer film structures described above, but also to the generic coextruded multilayer structure comprising at least one layer of a mono- or bi-axially oriented polyester composition, at least one tie layer and at least one sealant layer, wherein the polyester is a polyester obtainable by the polymerization of 1,3-propanediol with a dicarboxylic acid, or with a suitable aromatic dicarboxylic acid such as for example terephthalic, isophthalic, 2,6-naphthalic or bibenzoic acid, and/or a suitable furandicarboxylic acid such as 2,5-furandicarboxylic acid (FDCA).

In the second bubble B2, inflating allows for the tubular multilayer film structure to be drawn, or for at least one layer of the tubular multilayer film structure to be oriented, in both the machine/axial direction (MD) and the transverse/radial direction (TD) at the same time to yield a tubular multilayer film in which at least one layer is biaxially oriented. Significantly, other layers of the coextruded multilayer film structure may also become oriented in this process. These other layers include polymers with high melting temperatures, for example barrier layers or structural layers, and for example layers that include polyamides or certain ionomers.

The drawing in the machine/axial direction (MD) can be achieved by adjusting the speed V2 of a second set of nip rolls R2 that form the upstream (towards the extruder) end of the second bubble and the speed V3 of a third set of nip rolls R3 that form the downstream (away from extruder) end of the second bubble. Generally, V3 is greater than V2, or 2 to 4 times greater than V2. Stated alternatively, the ratio given by V3/V2 is equivalent to the MD drawing ratio and may preferably be from 2 to 4.

Still referring to FIG. 1, the drawing in the transverse/radial direction (TD) can be achieved by adjusting the pressure P1 within the second bubble B2. To adjust the pressure P1, the distance L1 between a first set of nip rolls R2 that form the hermetically closed upstream (towards the extruder) end of the second bubble B2, and a second set of nip rolls R3 that form the hermetically closed downstream (away from extruder) end of the second bubble B2 can be adjusted. Reducing the distance L1 between the two sets of nip rolls (R2, R3) may increase the pressure P1, whereas increasing the distance L1 may lower the pressure P1 within the second bubble. After the drawing in the transverse/radial direction (TD), the initial diameter D1 of the softened tubular multilayer film can be increased to a diameter D2, wherein the TD drawing ratio given by D2/D1 is preferably from 2 to 5, or from 2.5 to 3.5.

The biaxially oriented, tubular coextruded multilayer film structure is cooled by air surrounding the bubble before passing through the third set of nip rolls R3, where the tubular coextruded multilayer film structure is flattened to be more easily conveyed. After passing through the set of rolls R3, the tubular coextruded multilayer film structure is passed through a fourth set of nip rolls R4 that form the hermetically closed upstream (towards the extruder) end of the third bubble B3, and a fifth set of nip rolls R5 that form the hermetically closed downstream (away from extruder) end of the third bubble B3.

The fourth and fifth set of nip rolls (R4,R5) are separated by a distance L2 that can be adjusted to increase or decrease the pressure P2 within the third bubble B3 in order to allow the previously drawn tubular coextruded multilayer film structure to relax in transverse/radial direction (TD).

Generally, this can be achieved by adjusting the pressure P2 in the third bubble B3 such that the pressure P2 is lesser than the pressure P1. The pressure is adjusted by modifying the distance L2 between the fourth and the fifth set of nip rolls (R4, R5) of the third bubble B3. The lesser pressure P2 may allow the tubular multilayer film to relax to a diameter D3. The relaxation ratio is given by the ratio of D3/D2, whereas D3 is usually lesser than D2 and concurrently the ratio of D3/D2 is smaller than 1. Typically the ratio of D3/D2 can be between 0.8 and 0.95, or between 0.85 and 0.9.

The speed V4 of the fourth set of nip rolls R4 and the speed V5 of the fifth set of nip rolls may be adjusted in order to allow the previously drawn tubular coextruded multilayer film structure to relax in machine/axial direction (MD).

Generally, this can be achieved by adjusting the speed V5 of the fifth set of nip rolls R5 such that V5 is lesser than V4. The relaxation ratio is given by V5/V4, whereas V5 is usually lesser than V4 and concurrently the ratio of V5/V4 is smaller than 1. Typically the ratio of V5/V4 can be from 0.8 to 0.95, or from 0.85 to 0.9.

The temperature of the tubular multilayer film structure in the third bubble can be adjusted by a heating device H2, such as for example an IR heater or heated air heater, hot water or steam, and can be chosen depending on the materials present in the tubular coextruded multilayer film structure. The heating device is may be positioned either at the upstream end of the third bubble B3 or along the length thereof.

Generally, the temperature of the tubular multilayer film structure in the third bubble can be from the glass transition point of the material having the lowest glass transition point in the tubular multilayer film structure to the melting point of the highest melting material of the tubular multilayer film structure with the proviso that the temperature of the tubular multilayer film structure in the third bubble is higher than the temperature of the tubular multilayer film structure in the second bubble.

The temperature of the tubular multilayer film structure in the third bubble, the pressure P2 and the ratio of V5/V4 may be adjusted individually or in parallel to achieve a tubular coextruded multilayer film structure exhibiting a shrink performance of less than 10 percent or of from 1 to 10 percent, or less than 5 percent or of from 1 to 5 percent, when measured after exposure to a temperature of 120°C for 10 seconds in dry hot air, using a sample of 10 x 10 cm, in machine/axial direction (MD) and/or transverse/radial direction (TD). A shrink performance of 10% in machine/axial direction (MD) and/or transverse/radial direction (TD) means that the sample has shrunk to 90% of its original dimensions in machine/axial direction (MD) and/or transverse/radial direction (TD).

Alternatively, the temperature of the tubular multilayer film structure in the third bubble, the pressure P2 and the ratio of V5/V4 may be adjusted individually or in parallel to achieve a tubular coextruded multilayer film structure exhibiting a shrink performance of more than 30 percent or of from 30 to 60 percent, or from 30 to 50 percent, when measured after exposure to a temperature of 90°C for 10 seconds in a hot water bath, using a sample of 10 x 10 cm, in machine/axial direction and/or transverse/radial direction. A shrink performance of 50% in machine/axial direction (and/or transverse/radial direction means that the sample has shrunk to 50% of its original dimensions in machine/axial direction and/or transverse/radial direction.

Immediately before being flattened by passing through the fifth set of nip rolls R5, the tubular multilayer film in the third bubble may be optionally cooled by blown air, and can subsequently be stored on a roll S.

Optionally, the tubular coextruded multilayer film exiting the fifth set of nip rolls R5 can be slit on one side by a slitting knife K to yield a planar coextruded multilayer film structure that can be stored on a roll S.

The above process provides for the manufacture of a coextruded multilayer film structure, comprising at least one layer of polytrimethylene terephthalate or polytrimethylene furanoate polymer composition, at least one tie layer, and a sealant layer. The coextruded multilayer film structure has excellent barrier properties as well as good mechanical properties.

The present invention further provides for a packaging article comprising the coextruded multilayer film structure described above, for example a lidding film for a container or a heat shrink film in a package, as well as the use of said coextruded multilayer film structure therein.

While certain of the preferred embodiments of the present invention have been described or specifically exemplified above, it is not intended that the invention be limited to such embodiments. Rather, it is to be understood that even though numerous characteristics and advantages of the present invention have been set forth in the foregoing description, together with details of the structure and function of the invention, the disclosure is illustrative only, and changes may be made in detail, especially in matters of shape, size and arrangement of parts, within the principles of the invention to the full extent indicated by the broad general meaning of the terms in which the appended claims are expressed.

## Claims

1. A process for producing a multilayer structure, said process comprising the steps of:
melt-extruding, in separate extruders, (a) a polyester composition, (b) a tie layer composition comprising a pressure sensitive adhesive, and (c) a sealant composition whereby separate molten streams of layer (a),layer (b), and layer (c) are produced;
producing a multilayer structure comprising, in the order, layer (a), layer (b), and layer (c); and, optionally,
laminating the multilayer structure onto a structural layer;
wherein the polyester composition, in which the polyester is monoaxially or biaxially oriented, comprises a polytrimethylene terephthalate, a polytrimethylene furanoate polymer, or a polytrimethylene terephthalate and a polytrimethylene furanoate; the tie layer comprises an ethylene alkyl (meth)acrylate, an ethylene ionomer, or an ethylene alkyl (meth)acrylate and an ethylene ionomer; the sealant composition has a melting temperature of from 80°C to 130°C or from 80°C to 100°C; the structural layer is in direct contact with the sealant layer, and the structural layer is selected from the group consisting of foil, paper, paperboard, polyester, polyamide, polyolefin, polyethylene vinyl alcohol, polyethylene vinyl acetate, ethylene acid copolymer, ionomer of the ethylene acid copolymer, polyvinyl chloride, polyvinylidene chloride, and anhydride-modified polyolefin, polyacetal, polyacetal copolymer, or combinations of two or more thereof.

2. The method of claim 1, wherein
the molten streams of (a), (b), and (c) are passed through a set of annular dies to provide a multilayer tubular bubble layer wherein layer (b) is positioned between layer (a) and layer (c), layer (a) is the inside layer, and layer (c) is the outside layer of the bubble; expanding the bubble in the radial direction by inflating with a fluid and drawing the bubble in the axial direction; cooling the bubble to provide a multilayer tubular film;
orienting at least one layer of the multilayer tubular film under heat in a second bubble to produce an oriented coextruded tubular multilayer;
relaxing the oriented coextruded tubular multilayer film under heating in a third bubble; and optionally
laminating layer (c) of the multilayer tubular film to the structural layer to produce the multilayer structure.

3. The method of claim 1, wherein
the melt-extruding is carried out by extruding, in separate extruders, (a) the polyester composition, (b) the tie layer, and (c) the sealant composition, and optionally (d) an additional tie layer composition comprising a polymer composition having a melting temperature of about 80 to about 120°C, to provide molten streams of (a), (b), (c), and (d);
the producing is carried out by combining the molten streams of (a), (b), (c) and (d) into a multilayer stream wherein layer (b) is positioned between layer (a) and layer (c); and layer (d) is positioned between layer (a) and layer (b); passing the multilayer stream through a slot die to provide a multilayer melt curtain; contacting the multilayer melt curtain with a structure layer to provide a multilayer coating on the structure layer; and cooling the multilayer coating to solidify the coating and provide a coated multilayer structure;
orienting at least one layer of the multilayer tubular film under heat in a second bubble to produce an oriented coextruded tubular multilayer;
relaxing the oriented coextruded tubular multilayer film under heating in a third bubble; and optionally
laminating the layer (c) of the multilayer melt stream to the structural layer to produce the multilayer structure.

4. A coextruded multilayer structure comprising a polyester layer, a tie layer, and a sealant layer wherein the polyester layer is mono-axially oriented or bi-axially oriented and comprises a polytrimethylene terephthalate, a polytrimethylene furanoate polymer, or a polytrimethylene terephthalate and a polytrimethylene furanoate polymer, and wherein said coextruded multilayer structure is obtainable by the process of claim 1.

5. The multilayer structure of claim 4, being produced by a triple bubble process.

6. The multilayer structure of claim 5, wherein the thickness of the polyester layer is in the range of from 2 to 5 µm.

7. The multilayer structure of claim 4, wherein the tie layer comprises an ethylene alkyl (meth)acrylate, an ethylene ionomer, or both; and the ionomer is derived from an ethylene acid copolymer neutralized with a zinc ion, a sodium ion, or both.

8. The multilayer structure of claim 4, further comprising a substrate layer in direct contact with the sealant layer wherein the substrate is foil, paper, paperboard, polyester, polyamide, polyolefin, polyethylene vinyl alcohol, polyethylene vinyl acetate, ethylene acid copolymer, ionomer of the ethylene acid copolymer, polyvinyl chloride, polyvinylidene chloride, and anhydride-modified polyolefin, polyacetal, polyacetal copolymer, or combinations of two or more thereof.

9. A packaging article comprising the coextruded multilayer structure of claim 4.

## Patentansprüche

1. Ein Prozess zum Herstellen einer mehrschichtigen Struktur, wobei der Prozess die folgenden Schritte beinhaltet:
Schmelzextrudieren, in separaten Extrudern, von (a) einer Polyesterzusammensetzung, (b) einer Haftvermittlerschichtzusammensetzung, die einen Haftkleber beinhaltet, und (c) einer Dichtungsmittelzusammensetzung, wodurch separate geschmolzene Ströme von Schicht (a), Schicht (b) und Schicht (c) hergestellt werden;
Herstellen einer mehrschichtigen Struktur, die in dieser Reihenfolge Schicht (a), Schicht (b) und Schicht (c) beinhaltet; und optional
Laminieren der mehrschichtigen Struktur auf eine strukturelle Schicht;
wobei die Polyesterzusammensetzung, in der der Polyester monoaxial oder biaxial orientiert ist, ein Polytrimethylenterephthalat, ein Polytrimethylenfuranoatpolymer oder ein Polytrimethylenterephthalat und ein Polytrimethylenfuranoat beinhaltet; die Haftvermittlerschicht ein Ethylenalkyl(meth)acrylat, ein Ethylenionomer oder ein Ethylenalkyl(meth)acrylat und ein Ethylenionomer beinhaltet; die Dichtungsmittelzusammensetzung eine Schmelztemperatur von 80 °C bis 130 °C oder
von 80 °C bis 100 °C aufweist, die strukturelle Schicht in direktem Kontakt mit der Dichtungsmittelschicht ist; und die strukturelle Schicht aus der Gruppe ausgewählt ist, die aus Folgendem besteht: Metallfolie, Papier, Karton, Polyester, Polyamid, Polyolefin, Polyethylenvinylalkohol, Polyethylenvinylacetat, Ethylensäurecopolymer, lonomer des Ethylensäurecopolymers, Polyvinylchlorid, Polyvinylidenchlorid und
anhydridmodifiziertem Polyolefin, Polyacetal, Polyacetalcopolymer oder Kombinationen von zwei oder mehr davon.

2. Verfahren gemäß Anspruch 1, wobei
die geschmolzenen Ströme von (a), (b) und (c) durch einen Satz Ringdüsen geführt werden, um eine mehrschichtige röhrenförmige Blasenschicht bereitzustellen, wobei Schicht (b) zwischen Schicht (a) und Schicht (c) positioniert ist, Schicht (a) die Innenschicht ist und Schicht (c) die Außenschicht der Blase ist;
Aufweiten der Blase in der radialen Richtung durch Aufblasen mit einem Fluid und Ziehen der Blase in der axialen Richtung; Abkühlen der Blase, um eine mehrschichtige röhrenförmige Folie bereitzustellen;
Orientieren mindestens einer Schicht der mehrschichtigen röhrenförmigen Folie unter Wärme in einer zweiten Blase, um eine orientierte coextrudierte röhrenförmige Mehrschichtige herzustellen;
Entspannen der orientierten coextrudierten röhrenförmigen mehrschichtigen Folie unter Erwärmen in einer dritten Blase; und optional
Laminieren von Schicht (c) der mehrschichtigen röhrenförmigen Folie auf die strukturelle Schicht, um die mehrschichtige Struktur herzustellen.

3. Verfahren gemäß Anspruch 1, wobei
das Schmelzextrudieren durch das Extrudieren in separaten Extrudern von (a) der Polyesterzusammensetzung, (b) der Haftvermittlerschicht und (c) der Dichtungsmittelzusammensetzung und optional (d) einer zusätzlichen Haftvermittlerschichtzusammensetzung, die eine Polymerzusammensetzung mit einer Schmelztemperatur von etwa 80 bis etwa 120 °C beinhaltet, ausgeführt wird, um geschmolzene Ströme von (a), (b), (c) und (d) bereitzustellen;
das Herstellen durch Folgendes ausgeführt wird: Kombinieren der geschmolzenen Ströme von (a), (b), (c) und (d) zu einem mehrschichtigen Strom, wobei Schicht (b) zwischen Schicht (a) und Schicht (c) positioniert ist; und Schicht (d) zwischen Schicht (a) und Schicht (b) positioniert ist; Führen des mehrschichtigen Stroms durch eine Schlitzdüse, um einen mehrschichtigen Schmelzvorhang bereitzustellen; In-Kontakt-Bringen des mehrschichtigen Schmelzvorhangs mit einer Strukturschicht, um eine mehrschichtige Beschichtung auf der Strukturschicht bereitzustellen; und Abkühlen der mehrschichtigen Beschichtung, um die Beschichtung zu verfestigen und eine beschichtete mehrschichtige Struktur bereitzustellen;
Orientieren mindestens einer Schicht der mehrschichtigen röhrenförmigen Folie unter Wärme in einer zweiten Blase, um eine orientierte coextrudierte röhrenförmige Mehrschichtige herzustellen;
Entspannen der orientierten coextrudierten röhrenförmigen mehrschichtigen Folie unter Erwärmen in einer dritten Blase; und optional
Laminieren der Schicht (c) des mehrschichtigen Schmelzstroms auf die strukturelle Schicht, um die mehrschichtige Struktur herzustellen.

4. Eine coextrudierte mehrschichtige Struktur, die eine Polyesterschicht, eine Haftvermittlerschicht und eine Dichtungsmittelschicht beinhaltet, wobei die Polyesterschicht monoaxial orientiert oder biaxial orientiert ist und ein Polytrimethylenterephthalat, ein Polytrimethylenfuranoatpolymer oder ein Polytrimethylenterephthalat und ein Polytrimethylenfuranoatpolymer beinhaltet und wobei die coextrudierte mehrschichtige Struktur durch den Prozess gemäß Anspruch 1 erhalten werden kann.

5. Mehrschichtige Struktur gemäß Anspruch 4, die durch einen Dreiblasenprozess hergestellt wird.

6. Mehrschichtige Struktur gemäß Anspruch 5, wobei die Dicke der Polyesterschicht in dem Bereich von 2 bis 5 µm liegt.

7. Mehrschichtige Struktur gemäß Anspruch 4, wobei die Haftvermittlerschicht ein Ethylenalkyl(meth)acrylat, ein Ethylenionomer oder beides beinhaltet; und das lonomer von einem mit einem Zinkion, einem Natriumion oder beidem neutralisierten Ethylensäurecopolymer abgeleitet ist.

8. Mehrschichtige Struktur gemäß Anspruch 4, die ferner eine Substratschicht in direktem Kontakt mit der Dichtungsmittelschicht beinhaltet, wobei es sich bei dem Substrat um Metallfolie, Papier, Karton, Polyester, Polyamid, Polyolefin, Polyethylenvinylalkohol, Polyethylenvinylacetat, Ethylensäurecopolymer, lonomer des Ethylensäurecopolymers, Polyvinylchlorid, Polyvinylidenchlorid und anhydridmodifiziertem Polyolefin, Polyacetal, Polyacetalcopolymer oder Kombinationen von zwei oder mehr davon handelt.

9. Ein Verpackungsartikel, der die coextrudierte mehrschichtige Struktur gemäß Anspruch 4 beinhaltet.

## Revendications

1. Un procédé pour produire une structure multicouche, ledit procédé comprenant les étapes :
d'extrusion à l'état fondu, dans des extrudeuses distinctes, (a) d'une composition de polyester, (b) d'une composition de couche de liaison comprenant un adhésif sensible à la pression, et (c) d'une composition de produit d'étanchéité moyennant quoi des flux fondus distincts de la couche (a), de la couche (b), et de la couche (c) sont produits ;
de production d'une structure multicouche comprenant, dans l'ordre, la couche (a), la couche (b), et la couche (c) ; et, facultativement,
de stratification de la structure multicouche sur une couche structurelle ;
où la composition de polyester, dans laquelle le polyester est monoaxialement ou biaxialement orienté, comprend un polytriméthylène téréphtalate, un polymère de polytriméthylène furanoate, ou un polytriméthylène téréphtalate et un polytriméthylène furanoate ; la couche de liaison comprend un éthylène (méth)acrylate d'alkyle, un ionomère d'éthylène, ou un éthylène (méth)acrylate d'alkyle et un ionomère d'éthylène ;
la composition de produit d'étanchéité a une température de fusion allant de 80 °C à 130 °C ou de 80 °C à 100 °C ; la couche structurelle est en contact direct avec la couche de produit d'étanchéité, et la couche structurelle est sélectionnée dans le groupe constitué de feuille métallique, de papier, de carton, de polyester, de polyamide, de polyoléfine, de poly(éthylène-alcool vinylique), de poly(éthylène-acétate de vinyle), de copolymère éthylène-acide, d'ionomère du copolymère éthylène-acide, de polychlorure de vinyle, de polychlorure de vinylidène, et de polyoléfine modifiée par anhydride, de polyacétal, de copolymère de polyacétal, ou de combinaisons de deux de ceux-ci ou plus.

2. La méthode de la revendication 1, où
les flux fondus de (a), de (b), et de (c) sont amenés à passer à travers un ensemble de filières annulaires afin de fournir une couche à bulle tubulaire multicouche où la couche (b) est positionnée entre la couche (a) et la couche (c), la couche (a) est la couche intérieure, et la couche (c) est la couche extérieure de la bulle ;
la dilatation de la bulle dans la direction radiale par gonflage avec un fluide et le fait de tirer la bulle dans la direction axiale ; le refroidissement de la bulle afin de fournir un film tubulaire multicouche ;
l'orientation d'au moins une couche du film tubulaire multicouche sous une chaleur dans une deuxième bulle afin de produire une multicouche tubulaire coextrudée orientée ;
le fait de détendre le film multicouche tubulaire coextrudé orienté sous chauffage dans une troisième bulle ; et facultativement
la stratification de la couche (c) du film tubulaire multicouche sur la couche structurelle afin de produire la structure multicouche.

3. La méthode de la revendication 1, où
l'extrusion à l'état fondu est effectuée par extrusion, dans des extrudeuses distinctes, de (a) la composition de polyester, de (b) la couche de liaison, et de (c) la composition de produit d'étanchéité, et facultativement de (d) une composition de couche de liaison supplémentaire comprenant une composition polymère ayant une température de fusion d'environ 80 à environ 120 °C, afin de fournir des flux fondus de (a), de (b), de (c), et de (d) ;
la production est effectuée par combinaison des flux fondus de (a), de (b), de (c) et de (d) en un flux multicouche où la couche (b) est positionnée entre la couche (a) et la couche (c) ; et la couche (d) est positionnée entre la couche (a) et la couche (b) ; passage du flux multicouche à travers une filière plate afin de fournir un rideau à l'état fondu multicouche ; mise en contact du rideau à l'état fondu multicouche avec une couche de structure afin de fournir un revêtement multicouche sur la couche de structure ; et refroidissement du revêtement multicouche afin de solidifier le revêtement et fournir une structure multicouche revêtue ;
l'orientation d'au moins une couche du film tubulaire multicouche sous une chaleur dans une deuxième bulle afin de produire une multicouche tubulaire coextrudée orientée ;
le fait de détendre le film multicouche tubulaire coextrudé orienté sous chauffage dans une troisième bulle ; et facultativement
la stratification de la couche (c) du flux de matière fondue multicouche sur la couche structurelle afin de produire la structure multicouche.

4. Une structure multicouche coextrudée comprenant une couche de polyester, une couche de liaison, et une couche de produit d'étanchéité où la couche de polyester est monoaxialement orientée ou biaxialement orientée et comprend un polytriméthylène téréphtalate, un polymère de polytriméthylène furanoate, ou un polytriméthylène téréphtalate et un polymère de polytriméthylène furanoate, et où ladite structure multicouche coextrudée peut être obtenue par le procédé de la revendication 1.

5. La structure multicouche de la revendication 4, produite par un procédé à triple bulle.

6. La structure multicouche de la revendication 5, où l'épaisseur de la couche de polyester est comprise dans l'intervalle allant de 2 à 5 µm.

7. La structure multicouche de la revendication 4, où la couche de liaison comprend un éthylène (méth)acrylate d'alkyle, un ionomère d'éthylène, ou les deux ; et l'ionomère est dérivé d'un copolymère éthylène-acide neutralisé avec un ion zinc, un ion sodium, ou les deux.

8. La structure multicouche de la revendication 4, comprenant en outre une couche de substrat en contact direct avec la couche de produit d'étanchéité où le substrat est une feuille métallique, du papier, du carton, un polyester, un polyamide, une polyoléfine, un poly(éthylène-alcool vinylique), un poly(éthylène-acétate de vinyle), un copolymère éthylène-acide, un ionomère du copolymère éthylène-acide, un polychlorure de vinyle, un polychlorure de vinylidène, et une polyoléfine modifiée par anhydride, un polyacétal, un copolymère de polyacétal, ou des combinaisons de deux de ceux-ci ou plus.

9. Un article d'emballage comprenant la structure multicouche coextrudée de la revendication 4.
